# EUROPEAN PATENT SPECIFICATION

(11) **EP 3 501 729 B1**
(45) Date of publication and mention of the grant of the patent: **24.07.2024**
(21) Application number: 18212727.4
(22) Date of filing: 14.12.2018
(51) Int. Cl.: B23Q 3/155, B23Q 17/00, B23Q 3/157

(54) **MACHINE FOR MACHINING WORKPIECES, PROVIDED WITH A SYSTEM TO MANAGE TOOLS, AND OPERATING METHOD THEREOF**
MASCHINE ZUR BEARBEITUNG VON WERKSTÜCKEN MIT EINEM WERKZEUGSVERWALTUNGSSYSTEM UND VERFAHREN DAFÜR
MACHINE POUR USINAGE DE PIÈCES ÉQUIPÉE D'UN SYSTÈME DE GESTION D'OUTILS ET PROCÉDÉ POUR CELUI-CI

(30) Priority: 20.12.2017 IT 201700146829
(43) Date of publication of application: 26.06.2019
(73) Proprietor: SCM Group S.p.A., 47921 Rimini (RN) (IT)
(72) Inventor: ANTONELLI, Marco, 47921 Rimini (RN) (IT)
(74) Representative: Tiburzi, Andrea

(56) References cited:
- EP-A1- 1 746 530
- WO-A1-94/02284

## Description

The invention relates to a machine for machining workpieces, made of wood and the like, provided with a system to manage tools, in particular an automatic numerical control machine.

The invention also relates to an operation method of the machine.

More in detail, the invention relates to a numerical control machine for machining workpieces made of wood, plastic, metal, fibreglass, glass and the like, provided with a system to control tools, designed and manufactured in particular for the identification, recognition and mapping of tools, housed in tool cribs, provided with identification means, in particular a code, but which can be used for any identification means.

The description below relates to a system for identification, recognition and mapping by means of a two-dimensional barcode, that is, a matrix, also called *QR Code* - *Quick Response Code*, but it is quite apparent how the same should not be considered limited to this specific use and to this specific code.

As is well known, the automatic numerical control machines for machining workpieces made of wood and the like substantially comprise a logic control unit, for the operation of the machine, a machining plane, for supporting and fixing workpieces to be machined, and a movable carriage which can translate on said machining plane, or be stationary in a position.

The machining plane extends from one end to an opposite end of the machine, according to a direction of extension X which is therefore also the direction of translation of the movable carriage.

The movable carriage supports one or more heads for machining movable workpieces, according to three axes of movement.

More specifically, each machining head is provided with a mandrel to which is coupled a specific tool-holder by means of a first end, on the basis of the machining to be performed.

Each tool-holder is, in turn, coupled, by means of a second end opposite the first end, to a specific tool for the machining to be performed on the workpiece.

The tool-holder and tool coupling is unique and is stored in the memory of the logic control unit.

The tool-holder and tool pair is loaded manually and randomly by an operator inside a tool crib positioned on the machine, before starting the machining.

The tool cribs can be linear fixed or movable and circular.

The linear fixed or movable tool cribs are positioned in the proximity of the machining plane, in particular at the ends of it, and comprise a plurality of housings in which are housed the tool-holder and tool pairs.

The fixed tool cribs remain in the same position during the operation of the machine, whilst the movable tool cribs can move towards or away from the machining plane and, therefore, the movable carriage.

The circular tool cribs are positioned in the proximity of the machining plane, in particular to the side of it, comprising one or more circular or elliptical planes, or having another shape, which rotate about the relative axis of symmetry are provided with a plurality of housings in which are housed the tool-holder and tool pairs.

As is well known, each tool-holder can currently be provided with identification means for allowing the definition of the coupling with the mandrel, on the basis of the machining program to be performed.

In the prior art machines, the tool-holders are provided with a chip, positioned inside the end which is coupled with the mandrel, comprising identification data of the tool-holder.

During the step for mapping the tools, an identification system, usually actuated pneumatically, detects the identification data present in the chip, before the tool-holder is coupled to the mandrel, and sends it to the logic control unit of the machine, in such a way that the exact position inside a tool crib of a tool-holder necessary for the machining to be performed is known.

The relevant prior art includes the european patent application EP 1746530 A1 and the international patent application WO 94/02284 A1.

It is clear how this procedure is onerous in terms of the time taken for each chip of each tool-holder to be read.

A further drawback associated with the known machines concerns the fact that it is not possible to check whether the tool-holder identified for a machining is actually coupled with the mandrel of the machining head to be used, thus determining problems relative to the safety of the machining of the workpiece.

In fact, if an incorrect tool-holder, and therefore tool, were coupled with a mandrel to be used for a specific machining such that the incorrect tool were unsuitable, the workpiece would undergo permanent damage, with possible consequent injury to operators positioned close to the incorrect tool.

Moreover, the prior art systems are only compatible with rotary circular tool cribs, since the identification systems are fixed and read the identification data contained in the chip of the tool-holder which is positioned each time at the identification system.

In light of the above, the aim of the invention is therefore to provide a machine for machining workpieces made of wood and the like, provided with a system to manage tools which carries out the mapping of the tools tool cribs in a fast manner.

Another aim of the invention is to provide a system to manage tools which allows a safe machining of the workpiece by the tool correctly coupled with the mandrel, by means of the respective tool-holder.

A further aim of this invention is to provide a system to manage tools which is compatible both with linear tool cribs, fixed or movable, and with circular tool cribs.

The specific object of this invention is therefore a machine according to appended claim 1.

Further, according to the invention, said at least one tool-holder can comprise a central body provided with an outer surface, a first end for coupling with said machine and a second end for coupling with said tool, and said identification means can be positioned on a portion of said outer surface of said central body.

Again, according to the invention, said tool-holder comprises a plurality of identification means.

Preferably, according to the invention, said identification means are a QR code or a bar code.

Further, according to the invention, said at least one code is affixed repeatedly on said portion of said outer surface of said central body.

Again, according to the invention, said reading device of said at least one code is an optical device.

Again, according to the invention, said at least one tool crib is a linear movable tool crib.

Preferably, according to the invention, said at least one tool crib is of the fixed linear type and said identification device is positioned in the proximity of said tool crib and is movable along it.

Further, according to the invention, said at least one tool crib is a circular or elliptical tool crib.

Again, according to the invention, the machine can comprise at least one movable linear tool crib and at least one circular or elliptical tool crib.

Preferably, according to the invention, said machine can comprise at least one movable linear tool crib and a first and a second circular tool crib.

Further, according to the invention, said machine can comprise a further reading device.

A further object of the invention is an operating method according to appended claim 13.

The invention is now described, by way of example and without limiting the scope of the invention, which is defined by the appended claims, with reference to the accompanying drawings which illustrate preferred embodiments of it, in which:
Figure 1 is a schematic view from above of a machine for machining workpieces, made of wood and the like, provided with a system to manage tools, according to the invention;

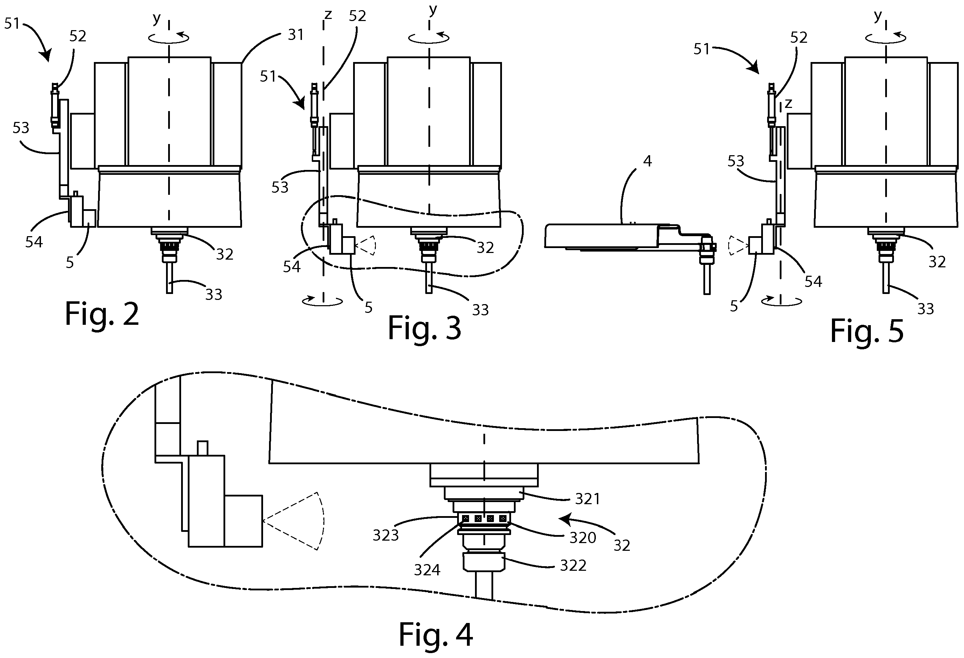

Figure 2 is a schematic front view of a detail of the machine of Figure 1;
Figure 3 is a schematic front view of a detail of the machine of Figure 1 in an operating position;
Figure 4 is a schematic front view of the enlarged detail of Figure 3;
Figure 5 is a schematic front view of a detail of the machine of Figure 1 in a further operating position;
Figure 6 is a schematic view from above of a second embodiment of the machine for machining workpieces, made of wood and the like, provided with a system to manage tools, according to the invention;
Figure 7 is a schematic view from above of a third embodiment of the machine for machining workpieces, made of wood and the like, provided with a system to manage tools, according to the invention;
Figure 8 is a schematic view from above of a fourth embodiment of the machine for machining workpieces, made of wood and the like, provided with a system to manage tools, according to the invention.

The similar parts will be indicated in the various drawings with the same numerical references.

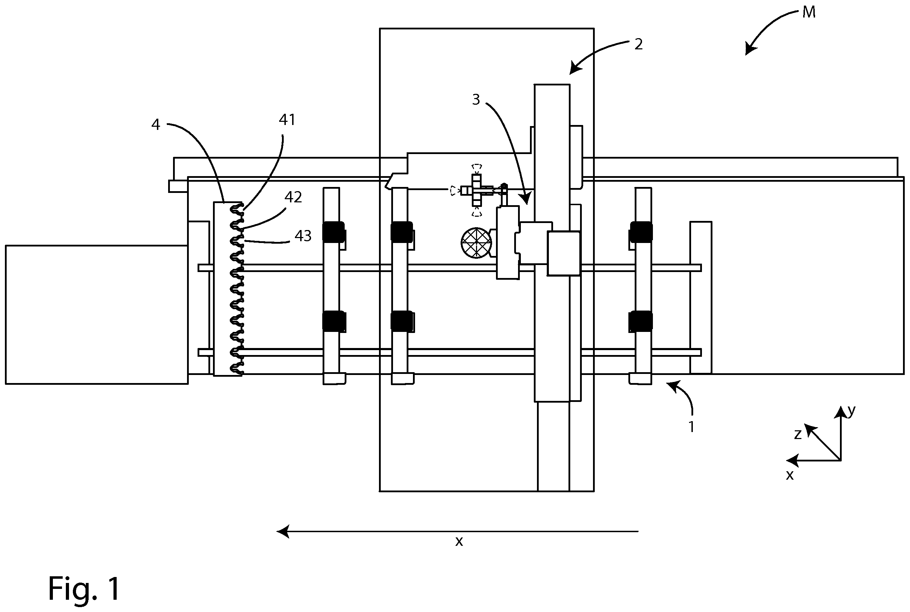

With reference to Figure 1, the machine M for machining workpieces made in wood, plastic, metal, fiberglass, glass and the like, provided with a system to manage tools according to the invention substantially comprises a logic control unit, not shown in the drawing, equipped with a predefined machining program for operation of said machine M, a machining plane 1, for supporting workpieces to be machined, a movable carriage 2 which supports at least one machining head 3 which actuates at least one tool-holder 32 to which is coupled a tool 33 for the execution of said machining program, and at least one tool crib 4 for housing said at least one tool-holder 32.

More specifically, said machining plane 1 has an elongate shape and extends according to a main direction X from one end to an opposite end of the machine M.

Said machining head 3 can move with respect to said machining surface 1 according to three axes of movement and comprises a mandrel 31 to which said tool-holder 32 is coupled.

Said mandrel 31 is actuated by an electric motor and rotated about its axis of rotation Y.

Said tool-holder 32 comprises a central body 320, provided with an outer surface, a first end 321, the so-called tool shank, which can be coupled with said mandrel 31 by rapid coupling means, and a second end 322 which can be coupled with said tool 33.

On a portion 323 of said outer surface of said central body 320 of said at least one tool-holder 32, located close to said first end 321 there is at least one identification mean 324 comprising information relative to the tool-holder 32.

More specifically, said identification mean 324 is a two-dimensional barcode, that is to say a matrix, also called *QR Code (Quick Response Code)* which is marked on the outer surface of said portion 323 by means of various prior art laser techniques such as annealing, in which there is a change of colour of predetermined zones of said portion 323, or engraving, in which predetermined zones of said portion 323 are engraved.

However, the code 324 can also be a bar code or a code of any type, without departing from the scope of protection of the invention.

The code 324 preferably has dimensions of 5 mm x 5 mm or 6 mm x 6 mm containing alphanumeric information of at least 10 characters.

The dimensions can however vary from the dimensions indicated, without departing from the scope of protection of the invention.

Preferably, the code 324 is printed repeatedly every 30° on the outer surface of said portion 323 in such a way as to facilitate the reading of the code 324, regardless of the angular position of the tool-holder 32 inside the tool crib 4, as described in more detail below.

The code 324 of said tool-holder 32 is associated uniquely and stably with the tool 33, and with the characteristics typical of the tool 33 such as diameter, wear, maximum speed and the like, which is coupled to said tool-holder 32 for the performance of the specific machining program, as described in more detail below.

More specifically, said code 324 is also provided with a storage unit in which it is possible archive the data relative to the machining times of the tool, in order to program a replacement when the machining times reach a predetermined maximum threshold.

Said machining head 3 is coupled with a reading and writing device 5 of said code 324, in particular a matrix video camera, by means of a supporting structure 51.

Said reading and writing device 5 is also able to read the data relative to the machining time and to write, thereby updating said data.

Said supporting structure 51 comprises a piston 52 which actuates a rod 53 to which is coupled a bracket 54 which supports said reading and writing device 5.

Said supporting structure 51 is movable along an axis Z parallel to the axis of rotation Y of said mandrel 31.

More specifically, said supporting structure 51 passes from a rest position in which it is vertically withdrawn or raised with respect to said machining plane 1, to an operating position in which said rod 53 is lowered in such a way that said reading and writing device 5 is positioned facing towards said tool-holder 32 coupled, in use, to said mandrel 31, for reading the code 324.

Said rod 53 can also rotate about said axis Z, in such a way that said bracket 54 and therefore said reading and writing device 5 can be positioned facing towards a tool-holder 32 housed in said tool crib 4.

Moreover, said supporting structure 51 moves as one with said mandrel along the three axes of movement of the machining head 3.

Said at least one tool crib 4 is a tool crib of the linear movable type, positioned at one of the two ends of said machining plane 1, which is able to translate along said axis X away from or towards said machining plane 1.

Said tool crib 4 comprises a plurality of housings 41, 42, 43 ... or grippers designed to house a respective tool-holder 32.

The association between the individual housing and the individual tool-holder is performed in a unique fashion, for the entire duration of the machining program of the workpiece, as described in detail below.

Said machine M also comprises a logic control unit, in particular a numerical control type, in which are stored one or more programs for machining workpieces and also tables of data and specific parameters.

More specifically, the table of tools comprises the information contained in the code 324 of the tool-holder necessary for uniquely associating a tool-holder and a tool to be used for a specific machining program.

The table of tools also includes information concerning the exact positioning of the individual tool-holder 32 inside the corresponding housing 41, 42, 43 ... of the tool crib 4.

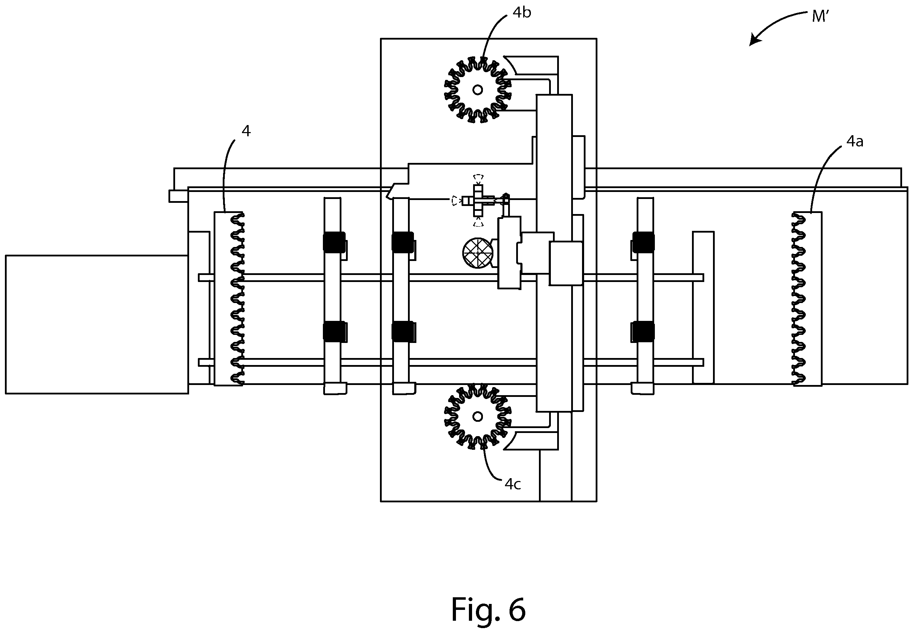

With reference to Figure 6, according to a second embodiment the machine M' differs from said machine M solely in that it also comprises a linear fixed tool crib 4ₐ positioned in the proximity of an opposite end with respect to that in the proximity of which is positioned said linear movable tool crib 4 and a first 4_{b} and/or a second circular tool crib 4_{c} positioned to the side of said machining surface 1, one opposite the other.

The structure of said fixed linear tool crib 4ₐ is identical to that of the movable linear tool crib 4.

Said first 4_{b} and second circular tool rib 4_{c} also have a plurality of housings.

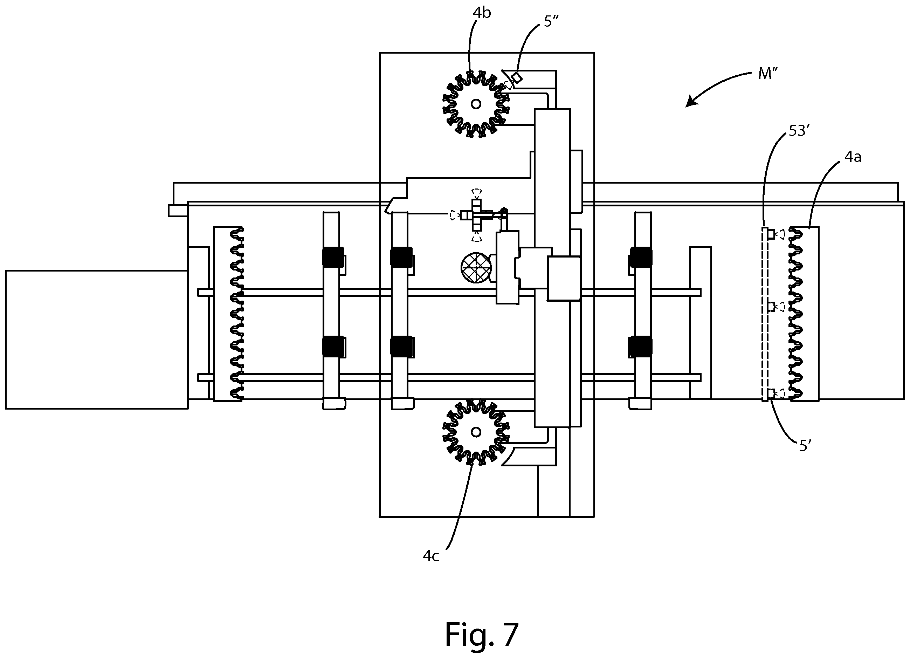

With reference to Figure 7, according to a third embodiment the machine M" differs from the second embodiment M' solely in that it comprises a second reading and writing device 5' and a third reading and writing device 5".

Said second reading and writing device 5' is coupled movable to a second supporting rod 53' positioned along all of said linear fixed tool crib 4ₐ.

Said third reading and writing device 5" is arranged in the proximity of said first circular tool crib 4_{b}.

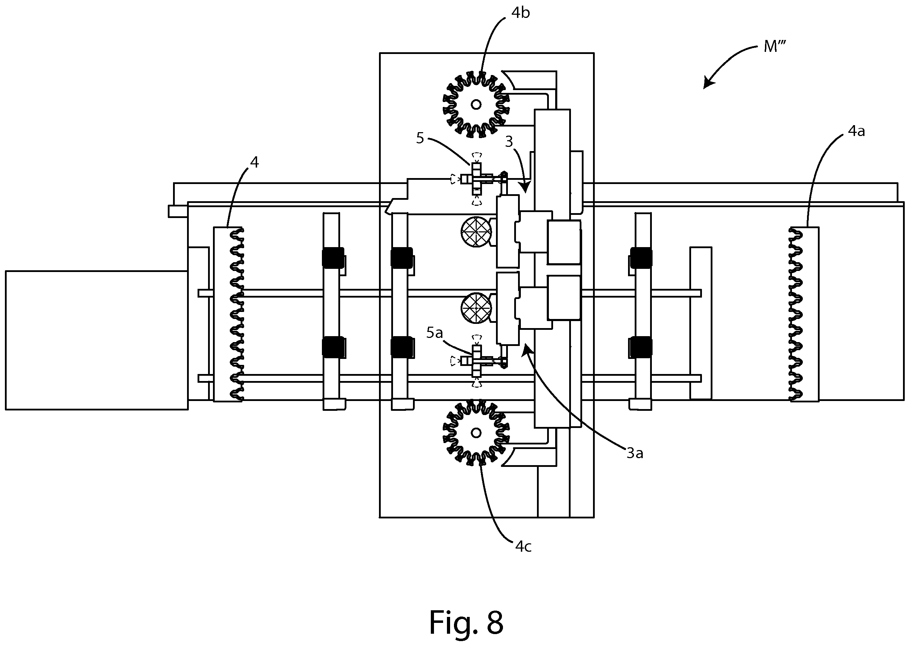

With reference to Figure 8, according to a fourth embodiment the machine M" differs from the second embodiment M' solely in that it comprises a second machining head 3ₐ substantially similar to said first machining head 3, in such a way that said reading and writing device 5 is positioned in the proximity of said first circular tool crib 4_{b} and a fourth reading and writing device 5ₐ is positioned in the proximity of said second circular too crib 4_{c}.

There can also be other embodiments of the machine M in which are present different combinations of tool cribs and reading devices, without, however, departing from the scope of protection of the invention.

The operation of the machine M described above is as follows.

When it is necessary to carry out the machining on a workpiece made of wood, plastic, metal, fibreglass, glass and the like, this is positioned on said machining plane 1 and a machining program stored in the logic control unit is selected.

Before staring the machining program it is necessary to perform a step or mapping the tools housed in the tool cribs, available for the machining, in order to create a stable association between tool-holder and tool during the entire machining and also for the subsequent machining programs.

The mapping step is only repeated when it is necessary to modify the association between tool-holder and tool.

Said reading and writing device 5 is moved by said machining head 3 and said supporting structure 51 in such a way as to be positioned in the proximity of said tool crib 4, at a suitable distance for the reading of said code 324.

Said reading and writing device 5 carries out the reading, according to a pre-set reading order, of each code 324 of each tool-holder 32 housed in the respective housing 42, 43, 44,... of said tool crib 4.

Said reading and writing device 5 also reads the data relative to the machining time of the tool and, if necessary, updates it.

Said reading and writing device 5 then sends the information contained in each code 324 to said logic control unit which completes the tool tables, in such a way that all the tools necessary to perform the machining program selected and the corresponding position inside the tool crib 4 are mapped, and for programming the replacement of the tool, if it has exceeded a predetermined machining time threshold.

When the machining of the work-pieces starts, the tool-holder 32, and, therefore, the tool 33 coupled with it, are automatically coupled with said mandrel 31, for performing the selected machining program.

In a second control step, said reading and writing device 5 performs a second reading of said code 324 present on the tool-holder 32 coupled with said mandrel 31, sends the information to said logic control unit which makes a comparison between the information received in the mapping step and the information received in said second control step.

Said reading step occurs whether said portion 323 is fixed or in rotation.

If the information coincides, that is to say, if the tool to be loaded in the tool-holder complies with the correct association, the machining starts, otherwise the logic control unit stops the machine M since the tool 33 coupled with the mandrel 31 is not suitable for the execution of the machining program selected.

The operation of the further embodiments M', M" and M‴ differs with respect to the operation described above relative to the machine M solely with respect to a step for verifying the type of tool crib present in the machine.

Before carrying out the mapping step, a step is performed for verifying the type of tool crib and the number of tool cribs present in the machine M.

More specifically, the logic control unit of the machine stores the types of tool cribs present in the machine.

The type of tool crib is known to the logic control unit and the reading and writing device 5 moves according to the commands received from the logic control unit.

As is apparent from the above description, the machine according to the invention allows a fast mapping of the tools present in the tool cribs to be performed, whatever the type of tool crib, and also allows the exact coupling between the mandrel and the tool necessary for the execution of a selected machining program to be verified, to guarantee the safety of operation of the machine.

## Claims

1. A machine (M, M', M", M‴) for machining workpieces made of wood, plastic, metal, fibreglass, glass and the like, comprising:
a logic control unit provided with at least one predetermined program for machining said workpieces;
at least one tool-holder (32), to which a tool (33) can be coupled for machining said workpieces according to said machining program, said tool-holder (32) being provided with at least one identification means (324) comprising information;
at least one tool crib (4, 4a, 4b, 4c) for housing said at least one tool-holder (32), when not in use;
said machine (M, M', M", M‴) comprising a device (5, 5', 5") for reading and writing said information comprised in said at least one said identification means (324) of said at least one tool-holder (32), designed to detect said information and send it to said logic control unit for determining the association and the coupling between said tool (33) and said at least one tool-holder (32) necessary for the execution of the machining program by said tool (33) coupled to said at least one tool-holder (32);
wherein said information comprised in said at least one identification means (324) also comprises machining data of said tool (33), said reading and writing device (5, 5', 5") being able to update said machining data of said tool (33);
wherein said reading and writing device (5, 5', 5") is movable with respect to said tool crib (4, 4ₐ, 4_{b}, 4_{c});
said machine (M, M', M", M‴) also comprising at least one movable machining head (3) with a mandrel (31), to which said at least one tool-holder (32) can be coupled by means of said mandrel (31), **characterised**
**in that** said reading and writing device (5) is arranged on said machining head (3);
**in that** said reading and writing device (5) is coupled to said machining head (3) by means of a supporting structure (51) movable integrally with said machining head (3),
**in that** said supporting structure (51) comprises a rod (53) which is vertically movable along an axis Z parallel to the axis of rotation of said mandrel (31) in such a way that said reading and writing device (5) can be lowered to be positioned facing towards said tool-holder (32) coupled, in use, to said mandrel (31), for reading the identification means (324), and
**in that** said a rod (53) is rotatable about said axis Z in such a way that said reading and writing device (5) can be positioned facing towards a tool-holder housed in said tool crib (4).

2. The machine (M, M', M", M‴) according to the preceding claim, **characterised**
**in that** said at least one tool-holder (32) comprises a central body (320) provided with an outer surface, a first end (321) for coupling with said machine (M, M', M", M‴) and a second end (322) for coupling with said tool (33), and;
**in that** said identification means (324) is arranged on a portion (323) of said outer surface of said central body (320).

3. The machine (M, M', M", M‴) according to any one of the preceding claims, **characterised in that** said tool-holder (32) comprises a plurality of identification means (324).

4. The machine (M, M', M", M‴) according to any one of the preceding claims, **characterised in that** said identification means (324) is a QR code or a bar code.

5. The machine (M, M', M", M‴) according to the preceding claim, **characterised in that** said at least one code (324) is affixed repeatedly on said portion (323) of said outer surface of said central body (320).

6. The machine (M, M', M", M‴) according to the preceding claim, **characterised in that** said reading and writing device (5, 5', 5") of said at least one code (324) is an optical device.

7. The machine (M, M') according to any one of the preceding claims, **characterised in that** said at least one tool crib (4) is a linear movable tool crib.

8. The machine (M") according to any one of claims 1 to 6, **characterised in that** said at least one tool crib (4a) is of a fixed linear type,

9. The machine (M', M", M‴) according to any one of claims 1 to 6, **characterised in that** said at least one tool crib (4b, 4c) is a circular or elliptical tool crib.

10. The machine (M', M", M‴) according to any one of claims 1 to 6, **characterised in that** it comprises at least one movable linear tool crib (4) and at least one circular or elliptical tool crib (4b).

11. The machine (M', M", M‴) according to any one of claims 1 to 6, **characterised in that** it comprises at least one movable linear tool crib (4) and a first (4b) and a second (4c) circular tool crib.

12. The machine (M") according to claim 8, **characterised in that** it comprises a further reading and writing device (5").

13. An operating method of a machine (M, M', M", M‴) for machining workpieces made in wood, plastic, metal, fiberglass, glass and the like, of the type comprising a logic control unit provided with at least one predetermined program for machining said workpieces, a machining head to which at least one tool-holder (32) can be coupled, to which a tool (33) can be coupled for machining said workpieces according to said machining program, said tool-holder (32) being provided with at least one identification means (324) comprising information, at least one tool crib (4, 4a, 4b, 4c) for housing said at least one tool-holder (32), when not in use, said method comprising the following steps:
a. selecting a machining program stored in the logic control unit;
b. providing a reading and writing device (5) for reading said information comprised in said identification means (324) of each of tool-holder (32) housed in the at least one tool crib (4, 4a, 4b, 4c), reading said information and sending it to said logic control unit;
c. depending on the information detected in said step b., mapping the tool holders (32) housed in the at least one tool crib (4, 4a, 4b, 4c), in particular associating to each tool-holder (32), necessary for the execution of the machining program, the position occupied in said at least one tool crib (4, 4a, 4b, 4c);
d. coupling to said machining head the tool-holder (32) necessary for the execution of the machining program;
e. performing a reading of the information of said identification means (324) of the tool-holder (32) coupled to the machining head in said step d.;
f. comparing said information read in said step b. with said information read in said step e.;
g. if said information compared in said step f. matches, executing the machining program, if said information does not match, not starting the machining program.

## Patentansprüche

1. Maschine (M, M', M", M'") zur Bearbeitung von Werkstücken aus Holz, Kunststoff, Metall, Glasfaser, Glas und dergleichen, umfassend:
eine logische Steuereinheit, die mit mindestens einem vorbestimmten Programm zur Bearbeitung der Werkstücke versehen ist;
mindestens einen Werkzeughalter (32), an den ein Werkzeug (33) gekoppelt werden kann, um die Werkstücke gemäß dem Bearbeitungsprogramm zu bearbeiten, wobei der Werkzeughalter (32) mit mindestens einem Identifikationsmittel (324) versehen ist, das Informationen enthält;
mindestens ein Werkzeugmagazin (4, 4a, 4b, 4c) zur Unterbringung des mindestens einen Werkzeughalters (32), wenn dieser nicht in Gebrauch ist;
wobei die Maschine (M, M', M", M‴)
eine Vorrichtung (5, 5', 5") zum Lesen und Schreiben der in dem mindestens einen Identifikationsmittel (324) des mindestens einen Werkzeughalters (32) enthaltenen Informationen umfasst, die dazu ausgelegt ist, die Informationen zu erfassen und sie an die logische Steuereinheit zu senden, um die Zuordnung und die Kopplung zwischen dem Werkzeug (33) und dem mindestens einen Werkzeughalter (32) zu bestimmen, die für die Ausführung des Bearbeitungsprogramms durch das mit dem mindestens einen Werkzeughalter (32) gekoppelte Werkzeug (33) erforderlich sind;
wobei die in dem mindestens einen Identifikationsmittel (324) enthaltene Information auch Bearbeitungsdaten des Werkzeugs (33) umfasst, wobei die Lese- und Schreibvorrichtung (5, 5', 5") in der Lage ist, die Bearbeitungsdaten des Werkzeugs (33) zu aktualisieren; wobei die Lese und Schreibvorrichtung (5, 5', 5") in Bezug auf das Werkzeuglager (4, 4a, 4b, 4c) beweglich ist;
wobei die Maschine (M, M', M", M'") auch mindestens einen beweglichen Bearbeitungskopf (3) mit einem Dorn (31) umfasst, an den der mindestens eine Werkzeughalter (32) mittels des Dorns (31) gekoppelt werden kann, **dadurch gekennzeichnet dass** das Lese und Schreibgerät (5) an dem Bearbeitungskopf (3) angeordnet ist;
dass die Lese und Schreibvorrichtung (5) mit dem Bearbeitungskopf (3) mittels einer Stützstruktur (51) gekoppelt ist, die einstückig mit dem Bearbeitungskopf (3) beweglich ist,
dass die Tragstruktur (51) eine Stange (53) umfasst, die entlang einer Achse Z parallel zur Drehachse des Dorns (31) vertikal beweglich ist, so dass die Lese und Schreibvorrichtung (5) abgesenkt werden kann, um in Richtung des Werkzeughalters (32) positioniert zu werden, der im Gebrauch mit dem Dorn (31) verbunden ist, um die Identifikationsmittel (324) zu lesen, und
dass die Stange (53) so um die Achse Z drehbar ist,
dass die Lese und Schreibvorrichtung (5) so positioniert werden kann, dass sie einem Werkzeughalter zugewandt ist, der in dem Werkzeugmagazin (4) untergebracht ist.

2. Maschine (M, M', M", M'") nach dem vorhergehenden Anspruch, **dadurch gekennzeichnet**
**dass** der mindestens eine Werkzeughalter (32) einen zentralen Körper (320) umfasst, der mit einer Außenfläche, einem ersten Ende (321) zur Verbindung mit der Maschine (M, M', M", M'") und einem zweiten Ende (322) zur Verbindung mit dem Werkzeug (33) versehen ist, und;
**dass** das Identifikationsmittel (324) auf einem Teil (323) der Außenfläche des zentralen Körpers (320) angeordnet ist.

3. Maschine (M, M', M", M‴) nach einem der vorhergehenden Ansprüche, **dadurch gekennzeichnet, dass** der Werkzeughalter (32) eine Vielzahl von Identifikationsmitteln (324) umfasst.

4. Maschine (M, M', M", M‴) nach einem der vorhergehenden Ansprüche, **dadurch gekennzeichnet, dass** das Identifikationsmittel (324) ein QR-Code oder ein Strichcode ist.

5. Maschine (M, M', M", M'") nach dem vorhergehenden Anspruch, **dadurch gekennzeichnet, dass** der mindestens einen Code (324) wiederholt auf dem Abschnitt (323) der Außenfläche des zentralen Körpers (320) angebracht ist.

6. Maschine (M, M', M", M'") nach dem vorhergehenden Anspruch, **dadurch gekennzeichnet, dass** die Lese- und Schreibvorrichtung (5, 5', 5") des mindestens eines Codes (324) eine optische Vorrichtung ist.

7. Maschine (M, M') nach einem der vorhergehenden Ansprüche, **dadurch gekennzeichnet, dass** das mindestens eine Werkzeugregal (4) ein linear bewegliches Werkzeugregal ist.

8. Maschine (M") nach einem der Ansprüche 1 bis 6, **dadurch gekennzeichnet,**
**dass** das mindestens eine Werkzeuglager (4a) ein feststehendes lineares Lager ist.

9. Maschine (M', M", M'") nach einem der Ansprüche 1 bis 6, **dadurch gekennzeichnet, dass** das mindestens eine Werkzeugregal (4b, 4c) ein kreisförmiges oder elliptisches Werkzeugregal ist.

10. Maschine (M', M", M'") nach einem der Ansprüche 1 bis 6, **dadurch gekennzeichnet, dass** sie mindestens ein bewegliches lineares Werkzeuglager (4) und mindestens ein kreisförmiges oder elliptisches Werkzeuglager (4b) aufweist.

11. Maschine (M', M", M'") nach einem der Ansprüche 1 bis 6, **dadurch gekennzeichnet, dass** sie mindestens ein bewegliches lineares Werkzeugregal (4) und ein erstes (4b) und ein zweites (4c) kreisförmiges Werkzeugregal umfasst.

12. Maschine (M") nach Anspruch 8, **dadurch gekennzeichnet, dass** sie eine weitere Lese und Schreibvorrichtung (5") umfasst.

13. Verfahren zum Betrieb einer Maschine (M, M', M", M'") zur Bearbeitung von Werkstücken aus Holz, Kunststoff, Metall, Glasfaser, Glas und dergleichen, mit einer logischen Steuereinheit, die mit mindestens einem vorbestimmten Programm zur Bearbeitung der Werkstücke versehen ist, einem Bearbeitungskopf, an den mindestens ein Werkzeughalter (32) gekoppelt werden kann, an den ein Werkzeug (33) gekoppelt werden kann, um die Werkstücke gemäß dem Bearbeitungsprogramm zu bearbeiten, wobei der Werkzeughalter (32) mit mindestens einem Identifikationsmittel (324) versehen ist, das Informationen enthält, mindestens ein Werkzeugmagazin (4, 4a, 4b, 4c) zur Aufnahme des mindestens einen Werkzeughalters (32), wenn er nicht in Gebrauch ist, wobei das Verfahren die folgenden Schritte umfasst:
a. Auswahl eines in der logischen Steuereinheit gespeicherten Bearbeitungsprogramms;
b. Bereitstellen einer Lese und Schreibvorrichtung (5) zum Lesen der Informationen, die in den Identifikationsmitteln (324) jedes Werkzeughalters (32) enthalten sind, der in dem mindestens einen Werkzeugmagazin (4, 4a, 4b, 4c) untergebracht ist, Lesen der Informationen und Senden dieser Informationen an die logische Steuereinheit;
c. in Abhängigkeit von den im Schritt b. erfassten Informationen, Zuordnen der in dem mindestens einen Werkzeugmagazin (4, 4a, 4b, 4c) untergebrachten Werkzeughalter (32), insbesondere Zuordnen der in dem mindestens einen Werkzeugmagazin (4, 4a, 4b, 4c) eingenommenen Position zu jedem Werkzeughalter (32), was für die Ausführung des Bearbeitungsprogramms erforderlich ist;
d. Ankoppeln des für die Ausführung des Bearbeitungsprogramms erforderlichen Werkzeughalters (32) an den Bearbeitungskopf;
e. Ausführen eines Lesens der Informationen der Identifikationsmittel (324) des Werkzeughalters (32), der mit dem Bearbeitungskopf in dem Schritt d. gekoppelt ist;
f. Vergleichen der im Schritt b. gelesenen Informationen mit den im Schritt e. gelesenen Informationen;
g. wenn die im Schritt f. verglichenen Informationen übereinstimmen, Ausführen des Bearbeitungsprogramms, wenn die Informationen nicht übereinstimmen, Nichtstarten des Bearbeitungsprogramms.

## Revendications

1. Machine (M, M', M", M'") pour l'usinage de pièces en bois, en plastique, en métal, en fibre de verre, en verre, et similaire, comprenant:
une unité de commande logique dotée d'au moins un programme prédéterminé pour l'usinage desdites pièces;
au moins un porte-outil (32), auquel peut être accouplé un outil (33) pour l'usinage desdites pièces selon ledit programme d'usinage, ledit porte-outil (32) étant pourvu d'au moins un moyen d'identification (324) comprenant des informations;
au moins un bac à outils (4, 4a, 4b, 4c) pour loger ledit au moins un porte-outil (32), lorsqu'il n'est pas utilisé;
ladite machine (M, M', M", M‴) comprenant
un dispositif (5, 5', 5") de lecture et d'écriture desdites informations comprises dans ledit au moins un desdits moyens d'identification (324) dudit au moins un porte-outil (32), conçu pour détecter lesdites informations et les envoyer à ladite unité de commande logique pour déterminer l'association et le couplage entre ledit outil (33) et ledit au moins un porte-outil (32) nécessaires à l'exécution du programme d'usinage par ledit outil (33) couplé audit au moins un porte-outil (32) ;
dans laquelle ladite information comprise dans ledit au moins un moyen d'identification (324) comprend également les données d'usinage dudit outil (33), ledit dispositif de lecture et d'écriture (5, 5', 5") étant capable de mettre à jour lesdites données d'usinage dudit outil (33) ;
dans laquelle
ledit dispositif de lecture et d'écriture (5, 5', 5") est mobile par rapport à ladite caisse à outils (4, 4a, 4b, 4c);
ladite machine (M, M', M", M‴) comprenant également au moins une tête d'usinage mobile (3) avec un mandrin (31), à laquelle ledit au moins un porte-outil (32) peut être accouplé au moyen dudit mandrin (31), **caractérisée en ce que** ledit dispositif de lecture et d'écriture (5) est disposé sur ladite tête d'usinage (3);
**en ce que** ledit dispositif de lecture et d'écriture (5) est couplé à ladite tête d'usinage (3) au moyen d'une structure de support (51) mobile d'un seul tenant avec ladite tête d'usinage (3),
**en ce que** ladite structure de support (51) comprend une tige (53) mobile verticalement selon un axe Z parallèle à l'axe de rotation dudit mandrin (31) de manière à ce que ledit dispositif de lecture et d'écriture (5) puisse être abaissé pour être positionné face audit porte-outil (32) couplé, en cours d'utilisation, audit mandrin (31), pour la lecture des moyens d'identification (324), et
**en ce que** ladite tige (53) est rotative autour dudit axe Z
de manière à ce que ledit dispositif de lecture et d'écriture (5) puisse être positionné en regard d'un porte-outil logé dans ladite caisse à outils (4).

2. Machine (M, M', M", M'") selon la revendication précédente, **caractérisée en ce que**
ledit au moins un porte-outil (32) comprend un corps central (320) pourvu d'une surface extérieure, d'une première extrémité (321) pour le couplage avec ladite machine (M, M', M", M'") et d'une seconde extrémité (322) pour le couplage avec ledit outil (33), et;
**en ce que** ledit moyen d'identification (324) est disposé sur une partie (323) de ladite surface extérieure dudit corps central (320).

3. Machine (M, M', M", M‴) selon l'une quelconque des revendications précédentes, **caractérisée en ce que** ledit porte-outil (32) comprend une pluralité de moyens d'identification (324).

4. Machine (M, M', M", M‴) selon l'une quelconque des revendications précédentes, **caractérisée en ce que** ledit moyen d'identification (324) est un code QR ou un code à barres.

5. Machine (M, M', M", M'") selon la revendication précédente, **caractérisée en ce que** ledit au moins un code (324) est apposé de manière répétée sur ladite portion (323) de ladite surface extérieure dudit corps central (320).

6. Machine (M, M', M", M'") selon la revendication précédente, **caractérisée en ce que** ledit dispositif de lecture et d'écriture (5, 5', 5") dudit au moins un code (324) est un dispositif optique.

7. Machine (M, M') selon l'une quelconque des revendications précédentes, **caractérisée en ce que** ledit au moins un banc d'outils (4) est un banc d'outils à déplacement linéaire.

8. Machine (M") selon l'une quelconque des revendications 1 à 6, **caractérisée**
**en ce que** ledit au moins un magasin d'outils (4a) est de type linéaire fixe.

9. Machine (M', M", M'") selon l'une quelconque des revendications 1 à 6, **caractérisée en ce que** ledit au moins un emplacement d'outil (4b, 4c) est un emplacement d'outil circulaire ou elliptique.

10. Machine (M', M", M'") selon l'une quelconque des revendications 1 à 6, **caractérisée en ce qu'**elle comprend au moins un bac à outils linéaire mobile (4) et au moins un bac à outils circulaire ou elliptique (4b).

11. Machine (M', M", M'") selon l'une quelconque des revendications 1 à 6, **caractérisée en ce qu'**elle comprend au moins une cage d'outil linéaire mobile (4) et une première (4b) et une seconde (4c) cage d'outil circulaire.

12. Machine (M") selon la revendication 8, **caractérisée en ce qu'**elle comprend un autre dispositif de lecture et d'écriture (5").

13. Procédé de fonctionnement d'une machine (M, M', M", M'") pour l'usinage de pièces en bois, plastique, métal, fibre de verre, verre et similaires, du type comprenant une unité de commande logique pourvue d'au moins un programme prédéterminé pour l'usinage desdites pièces, une tête d'usinage à laquelle peut être accouplé au moins un porte-outil (32), auquel peut être accouplé un outil (33), pour l'usinage desdites pièces selon ledit programme d'usinage, ledit porte-outil (32) étant pourvu d'au moins un moyen d'identification (324) comprenant des informations, au moins un bac à outils (4, 4a, 4b, 4c) pour loger ledit au moins un porte-outil (32), lorsqu'il n'est pas utilisé, ledit procédé comprenant les étapes suivantes:
a. sélectionner un programme d'usinage stocké dans l'unité de commande logique;
b. fournir un dispositif de lecture et d'écriture (5) pour lire les informations contenues dans les moyens d'identification (324) de chacun des porte-outils (32) logés dans le au moins une caisse à outils (4, 4a, 4b, 4c), lire ces informations et les envoyer à l'unité de commande logique;
c. en fonction des informations détectées à ladite étape b., cartographier les porte-outils (32) logés dans le au moins un magasin d'outils (4, 4a, 4b, 4c), notamment en associant à chaque porte-outil (32), nécessaire à l'exécution du programme d'usinage, la position occupée dans ledit au moins un magasin d'outils (4, 4a, 4b, 4c);
d. accoupler à ladite tête d'usinage le porte-outil (32) nécessaire à l'exécution du programme d'usinage;
e. effectuer une lecture des informations dudit moyen d'identification (324) du porte-outil (32) couplé à la tête d'usinage dans ladite étape d.;
f. comparer les informations lues à l'étape b. avec les informations lues à l'étape e.;
g. si les informations comparées à l'étape f. correspondent, exécuter le programme d'usinage; si les informations ne correspondent pas, ne pas lancer le programme d'usinage.
